# EUROPEAN PATENT SPECIFICATION

(11) **EP 2 351 407 B1**
(45) Date of publication and mention of the grant of the patent: **03.01.2018**
(21) Application number: 09824991.5
(22) Date of filing: 06.11.2009
(51) Int. Cl.: H04W 76/04, H04W 24/04, H04L 12/26

(54) **METHOD AND APPARATUS FOR MONITORING DOWNLINK CONTROL CHANNEL IN A USER EQUIPMENT**
VERFAHREN UND VORRICHTUNG ZUR ÜBERWACHUNG VON DOWNLINK-STEUERKANÄLEN IN EINEM BENUTZERGERÄT
PROCÉDÉ ET APPAREIL DE SURVEILLANCE DE CANAL DE COMMANDE DE LIAISON DESCENDANTE DANS UN ÉQUIPEMENT UTILISATEUR

(30) Priority: 06.11.2008 US 112154 P; 22.10.2009 KR 20090100804
(43) Date of publication of application: 03.08.2011
(73) Proprietor: LG Electronics Inc., Yeongdeungpo-Gu Seoul 07336 (KR)
(72) Inventor: CHUN, Sung Duck, Anyang-si Gyeonggi-do 431-080 (KR); YI, Seung June, Anyang-si Gyeonggi-do 431-080 (KR); PARK, Sung Jun, Anyang-si Gyeonggi-do 431-080 (KR)
(74) Representative: Cabinet Plasseraud
(86) International application number: PCT/KR2009/006512
(87) International publication number: WO 2010/053308

(56) References cited:
- WO-A1-2008/114977
- KR-A- 20010 028 766
- KR-A- 20040 106 467
- US-A1- 2003 152 044
- US-A1- 2008 132 230
- "3rd Generation Partnership Project; Technical Specification Group Radio Access Network; Evolved Universal Terrestrial Radio Access (E-UTRA) Medium Access Control (MAC) protocol specification (Release 8)", 3GPP STANDARD; 3GPP TS 36.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 September 2008 (2008-09-01), pages 1-34, XP050377619,

## Description

### [Technical Field]

The present invention relates to a Long Term Evolution (LTE) system, and more particularly to a method for monitoring a downlink control channel in a User Equipment (UE) in a wireless communication system.

### [Background Art]

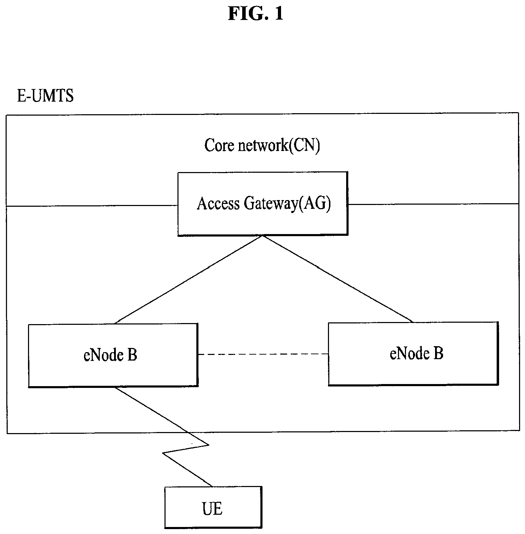

FIG. 1 illustrates a network structure of an Evolved Universal Mobile Telecommunication System (E-UMTS). An E-UMTS system is an evolved version of a Wideband Code Division Multiple Access (WCDMA) UMTS system, and its basic standardization is in progress under the 3rd Generation Partnership Project (3GPP). The E-UMTS is also referred to as an LTE system. Release 7 and Release 8 of "3rd Generation Partnership Project; Technical Specification Group Radio Access Network" can be referred to for details of the technical specifications of the UMTS and E-UMTS.
As shown in FIG. 1, the E-UMTS includes a User Equipment (UE), base stations (or eNBs or eNode Bs), and an Access Gateway (AG), which is located at an end of a Evolved Universal Terrestrial Radio Access Network (E-UTRAN) (not shown) and which is connected to an external network.

Generally, an eNB can simultaneously transmit multiple data streams for a broadcast service, a multicast service, and/or a unicast service. The AG can be divided into a part that handles processing of user traffic and a part that handles control traffic. The AG part for processing new user traffic and the AG part for processing control traffic can communicate with each other using a new interface. One or more cells may be present for one eNB. An interface for transmitting user traffic or control traffic can be used between eNBs. A Core Network (CN) may include the AG and a network node or the like for registering users of UEs. An interface for discriminating between the E-UTRAN and the CN can also be used. The AG manages mobility of UEs on a Tracking Area (TA) basis. One TA includes a plurality of cells. When the UE has moved from a specific TA to another TA, the UE notifies the AG that the TA, where the UE is located, has been changed.

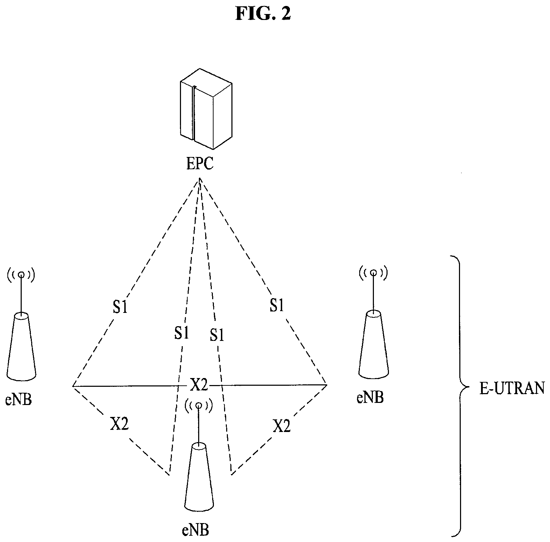

FIG. 2 illustrates a network structure of an E-UTRAN system. The E-UTRAN system is an evolved version of the conventional UTRAN system. The E-UTRAN includes base stations that will also be referred to as "eNode Bs" or "eNBs." The eNBs are connected through X2 interfaces. The X2 user plane interface (X2-U) (not shown) is defined between eNBs. The X2-U interface provides non-guaranteed delivery of user plane Packet Data Units (PDUs). The X2 control plane interface (X2-CP) (not shown) is defined between two neighboring eNBs. The X2-CP performs various functions, including context transferring between eNBs, controlling of user plane tunnels between a source eNB and a target eNB, transferring of handover-related messages, and uplinking load management.

Each eNB is connected to UEs through a radio interface and is connected to an Evolved Packet Core (EPC) through an S1 interface. The S1 user plane interface (S1-U) (not shown) is defined between the eNB and the Serving Gateway (S-GW) (not shown). The S1-U interface provides non-guaranteed delivery of user plane PDUs between the eNB and the S-GW. The S1 control plane interface (S1-MME) (not shown) is defined between the eNB and the MME (Mobility Management Entity) (not shown). The S1 interface performs various functions, including EPS (Enhanced Packet System) Bearer Service Management function, NAS (Non-Access Stratum) Signaling Transport function, Network Sharing Function, and MME Load balancing Function.

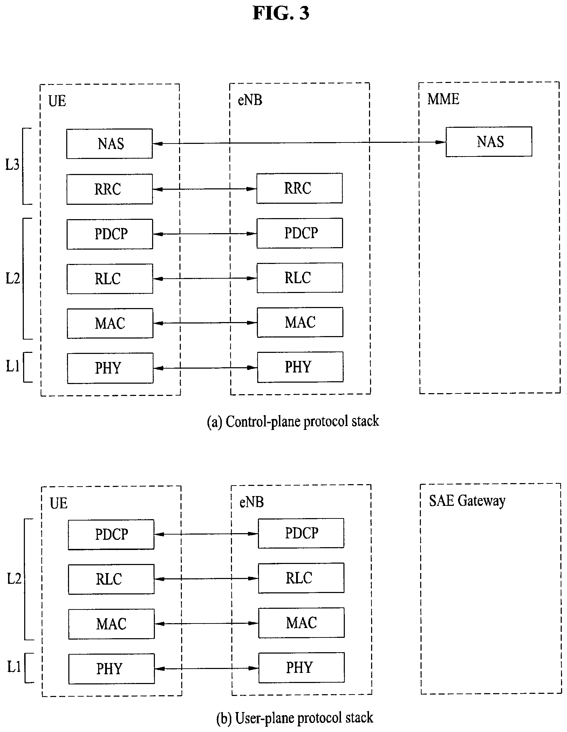

FIG. 3 illustrates configurations of a control plane and a user plane of a radio interface protocol between the E-UTRAN and a UE according to the 3GPP radio access network standard. The radio interface protocol is divided horizontally into a physical layer, a data link layer, and a network layer. The radio interface protocol is divided vertically into a user plane for data transmission and a control plane for signaling. The protocol layers of FIG. 3 can be divided into a first layer (L1 layer), a second layer (L2 layer), and a third layer (L3 layer) based on the lower three layers of the Open System Interconnection (OSI) reference model widely known in communication systems. The control plane is a passage through which a UE and a network transmit control messages in order to manage calls. The user plane is a passage through which data generated at an application layer is transmitted. The data generated at the application layer includes voice data or internet packet data. A more detailed description of the layers of the control and user planes in the radio interface protocol is provided below.

The physical layer, which is the first layer, provides an information transfer service to an upper layer using a physical channel. The physical layer is connected to a Media Access Control (MAC) layer, located above the physical layer, through a transport channel. Data is transferred between the MAC layer and the physical layer through the transport channel. Data transfer between different physical layers, specifically between the respective physical layers of transmitting and receiving sides, is performed through the physical channel. The physical channel is modulated in Orthogonal Frequency Division Multiplexing (OFDM), using time and frequencies as radio resources.

The MAC layer of the second layer provides a service to a Radio Link Control (RLC) layer, located above the MAC layer, through a logical channel. The RLC layer of the second layer supports reliable data transmission. The functions of the RLC layer may also be implemented through internal functional blocks of the MAC layer, in which case a separate RLC layer need not be present. A Packet Data Convergence Protocol (PDCP) layer of the second layer performs a header compression function to reduce unnecessary control information in order to efficiently transmit IP packets, such as IPv4 or IPv6 packets, in a radio interface with a relatively narrow bandwidth.

A Radio Resource Control (RRC) layer, located at the bottom of the third layer, is defined only in the control plane and is responsible for control of logical, transport, and physical channels in association with configuration, re-configuration, and release of Radio Bearers (RBs). The RB is a service that the second layer provides for data communication between the UE and the E-UTRAN. To accomplish this, the RRC layer of the UE and the RRC layer of the network exchange RRC messages. The UE is in an RRC connected mode if an RRC connection has been established between the RRC layer of the radio network and the RRC layer of the UE. Otherwise, the UE is in an RRC idle mode. A Non-Access Stratum (NAS) layer located above the RRC layer performs functions including the session management function and the mobility management function. One cell of the eNB is set to use a bandwidth such as 1.25, 2.5, 5, 10 or 20MHz to provide a downlink or uplink transmission service to UEs. Different cells may be set to use different bandwidths.

Downlink transport channels to transmit data from the network to the UE include a Broadcast Channel (BCH) for transmitting system information, a Paging Channel (PCH) for transmitting paging messages, and a downlink Shared Channel (SCH) for transmitting user traffic or control messages. User traffic or control messages of a downlink multicast or broadcast service may be transmitted through a downlink SCH.

Alternatively, user traffic or control messages of a downlink multicast or broadcast service may be transmitted through a downlink Multicast Channel (MCH). Uplink transport channels for transmitting data from the UE to the network include a Random Access Channel (RACH) for transmitting initial control messages and an uplink SCH for transmitting user traffic or control messages.

Logical channels are located above the transport channels and are mapped to the transport channels. Logical channels include a Broadcast Control Channel (BCCH), a Paging Control Channel (PCCH), a Common Control Channel (CCCH), a Multicast Control Channel (MCCH), and a Multicast Traffic Channel (MTCH).

A conventional Discontinuous Reception (DRX) method will be described hereinafter. DRX is related to an operation for determining when to transmit radio resource allocation information to a UE in an eNB. If the UE continuously monitors a downlink channel carrying the radio resource allocation information, particularly a Physical Downlink Control Channel (PDCCH), power consumption results. To avert this problem, the eNB transmits the radio resource allocation information to the UE on the PDCCH at a specific time according to a predetermined rule between the UE and the eNB. In addition, the receiver receives the radio resource allocation information on the PDCCH at a specific time according to the predetermined rule. Since the UE only needs to monitor the PDCCH at a specific time according to the DRX method, power consumption can be reduced.

A DRX operation method will be described hereinafter. In the LTE system, two DRX cycles, i.e., a Long DRX Cycle and a Short DRX Cycle, are used for a DRX operation. An appropriate use of the Long and Short DRX Cycles according to the data transmission status can minimize the data transmission delay while reducing battery power consumption. An Active Time refers to time during which the UE is awake and monitors the downlink channel, i.e., the PDCCH. In particular, the Active Time includes time during which a scheduling request is pending. In addition, with regard to uplink transmission, the Active Time includes time during which a radio resource allocation message can be retransmitted. The Active Time includes a time period from reception of RACH Message 2 (MSG 2) to reception of a C-RNTI or Temporary C-RNTI (T-C-RNTI) indicating allocation of radio resources for an initial transmission. After the Active Time, the UE does not need to monitor the PDCCH. The Active Time includes the running time of an On Duration Timer, a DRX Inactivity Timer, a DRX Retransmission Timer, or a Contention Resolution Timer.

The On Duration Timer specifies the number of consecutive PDCCH subframes from the beginning of a DRX cycle. The DRX Inactivity Timer specifies the number of consecutive PDCCH subframes after successfully decoding a PDCCH indicating an initial uplink or downlink user data transmission for a UE. The DRX Retransmission Timer specifies the maximum number of consecutive PDCCH subframes for as soon as the retransmission is expected by the UE. The Contention Resolution Timer specifies the number of consecutive subframes during which the UE monitors the PDCCH after Message 3 (MSG 3) is transmitted.

MSG 3 is a message transmitted on an UpLink Shared Channel (UL-SCH) having a Cell-Radio Network Temporary Identity (C-RNTI) Medium Access Control (MAC) Control Element (CE) or a Common Control Channel (CCCH) Service Data Unit (SDU). MSG 3 is submitted from an upper layer and is associated with the UE Contention Resolution Identity, as part of a random access procedure.

PDCCH subframes represent any subframes for a UE operating in Frequency Division Duplex (FDD). On the other hand, PDCCH subframes only represent downlink subframes and subframes, including Downlink Pilot Time Slots (DwPTSs) for a UE operating in Time Division Duplex (TDD).

The technical specification 3GPP TS 36.321, V8.3.0, "E-UTRA MAC protocol specification", XP050377619, specifies the E-UTRA MAC protocol.

### [Disclosure]

### [Technical Problem]

When the DRX function is set, the UE operates as follows in every Transmission Time Interval (TTI). If a Short DRX Cycle is used and the remainder of dividing [(SFN x 10) + Subframe Number] by the Short DRX Cycle is equal to a DRX Start Offset Cycle, the UE starts the On Duration Timer. The SFN represents a system frame number. One system frame is composed of 10 subframes and the SFN is the reference of an absolute time within a cell. Further, if a Long DRX Cycle is used and the remainder of dividing [(SFN x 10) + Subframe Number] by the Long DRX Cycle is equal to the DRX Start Offset, the UE starts the On Duration Timer.

If a Hybrid Automatic Repeat reQuest (HARQ) Round Trip Time (RTT) timer expires in a current subframe and data buffered in an HARQ buffer is not successfully decoded, a DRX Retransmission Timer is started. Upon receipt of a DRX command, DRX MAC CE, the On Duration Timer and the DRX Inactivity Timer is terminated. Upon expiration of the DRX Inactivity Timer or upon receipt of the DRX command, DRX MAC CE, if the Short DRX Cycle is set, the UE starts a DRX Short Cycle Timer and uses the Short DRX Cycle. If the Short DRX Cycle is not set, the UE uses the Long DRX Cycle. Upon expiration of the DRX Short Cycle Timer, the UE uses the Long DRX Cycle.

During the Active Time, the UE performs the following processes. The UE monitors the PDCCH except in an uplink transmission of a half-duplex UE or a measurement gap. When the UE receives a downlink assignment or a subframe carrying a configured downlink assignment, the UE starts the HARQ RTT timer and terminates the DRX Retransmission Timer for the HARQ process. If the PDCCH indicates an initial transmission, the UE starts or restarts the DRX Inactivity Timer.

The LTE system distributes the PDCCH monitoring times for multiple UEs using DRX Start Offsets. However, the use of a single DRX Start Offset for both Long and Short DRX Cycles may cause problems, which will be described in detail below.

### [Technical Solution]

Accordingly, the present invention is directed to a method for monitoring a downlink control channel in a UE that substantially obviates one or more problems due to limitations and disadvantages of the related art.

An object of the present invention is to provide a method for rendering a DRX operation to be reliable despite the use of a single DRX Start Offset, even when a DRX operation is performed using a plurality of DRX cycles.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the method for discontinuously monitoring downlink control channel in a user equipment in a wireless communication system includes receiving a discontinuous reception (DRX) Start Offset from a base station to be used for both a first DRX Cycle and a second DRX Cycle, and starting an On Duration Timer at a subframe that satisfies either a first condition for the first DRX Cycle or a second condition for the second DRX Cycle, wherein a first DRX offset used in the first condition is based upon the DRX Start Offset received from the base station, and wherein a second DRX offset used in the second condition is based upon a remainder of the DRX Start Offset received from the base station after a modulo operation by the second DRX Cycle.

In another aspect, the method for discontinuously monitoring downlink control channel in a user equipment in a wireless communication system includes receiving a discontinuous reception (DRX) Start Offset from a base station to be used for a DRX cycle, and calculating a DRX offset to be used in the DRX cycle as {the DRX Start Offset} MOD {DRX cycle}.

In another aspect, the method for discontinuously monitoring downlink control channel in a user equipment in a wireless communication system includes receiving a discontinuous reception (DRX) Start Offset from a base station to be used for a Long DRX cycle, and calculating a DRX offset to be used in a Short DRX Cycle as {the DRX Start Offset} MOD {Short DRX Cycle}.

In another aspect, the method for discontinuously monitoring downlink control channel in a user equipment in a wireless communication system includes determining whether a Short DRX Cycle or a Long DRX Cycle is used during data transmission from a base station to the user equipment, starting an On Duration Timer at a Subframe that satisfies {(System Frame Number) X 10 + Subframe Number} MOD {Short DRX Cycle} = {DRX Start Offset} MOD {Short DRX Cycle} if the Short DRX Cycle is used during the data transmission, and starting the On Duration Timer at a Subframe that satisfies {(System Frame Number) X 10 + Subframe Number} MOD {Long DRX Cycle} = {DRX Start Offset} if the Long DRX Cycle is used during the data transmission.

In another aspect, the apparatus for discontinuously monitoring downlink control channel in a user equipment in a wireless communication system includes a radio frequency receiver to receive a discontinuous reception (DRX) Start Offset from a base station to be used for both a first DRX Cycle and a Second DRX Cycle, a processor to start an On Duration Timer at a subframe that satisfies either a first condition for the first DRX Cycle or a second condition for the second DRX Cycle, wherein a first DRX offset used in the first condition is based upon the DRX Start Offset received from the base station, and wherein a second DRX offset used in the second condition is based upon a remainder of the DRX Start Offset received from the base station after a modulo operation by the second DRX Cycle, and a memory to store the first DRX offset and the second DRX offset.

In another aspect, the apparatus for discontinuously monitoring downlink control channel in a user equipment in a wireless communication system includes a radio frequency receiver to receive a DRX Start Offset from a base station to be used for a long DRX Cycle, a processor to calculate a DRX offset to be used in a Short DRX Cycle as {DRX Start Offset} MOD {Short DRX Cycle}, and a memory to store the calculated DRX offset.

In another aspect, the apparatus for discontinuously monitoring downlink control channel in a user equipment in a wireless communication system includes a radio frequency receiver to receive a discontinuous reception (DRX) Start Offset from a base station, a processor to calculate a DRX offset when a Short DRX Cycle is used, and a memory to store the calculated DRX offset.

In another aspect, the method for discontinuously monitoring downlink control channel in a user equipment in a wireless communication system includes receiving a Short DRX Start Offset and a Long DRX Start Offset from a base station, determining whether the Short DRX Cycle or the Long DRX Cycle is used during data transmission from the base station to the user equipment, starting an On Duration Timer at a Subframe that satisfies {(System Frame Number) X 10 + Subframe Number} MOD {Short DRX Cycle} = {Short DRX Start Offset} if a Short DRX Cycle is used during data transmission from a base station to the user equipment, and starting the On Duration Timer at a Subframe that satisfies {(System Frame Number) X 10 + Subframe Number} MOD {Long DRX Cycle} = {Long DRX Start Offset} if a Long DRX Cycle is used during the data transmission.

In another aspect, the apparatus for discontinuously monitoring downlink control channel in a user equipment in a wireless communication system includes a radio frequency receiver t to receive a Short DRX Start Offset and a Long DRX Start Offset from a base station, and a processor to determine whether the Short DRX Cycle or the Long DRX Cycle is used during data transmission from the base station to the user equipment, start an On Duration Timer at a Subframe that satisfies {(System Frame Number) X 10 + Subframe Number} MOD {Short DRX Cycle} = {Short DRX Start Offset} if a Short DRX Cycle is used during data transmission from the base station to the user equipment, and start the On Duration Timer at a Subframe that satisfies {(System Frame Number) X 10 + Subframe Number} MOD {Long DRX Cycle} = {Long DRX Start Offset} if a Long DRX Cycle is used during the data transmission.

It is to be understood that both the foregoing general description and the following detailed description of the present invention are exemplary and explanatory and are intended to provide further explanation of the invention as claimed.

### [Advantageous Effects]

The method of the present invention does not change the size of a message, for DRX operation, transmitted from the eNB to the UE, thereby saving radio resources. To be more specific, the eNB transmits a single value, i.e., single DRX Start Offset, to the UE. Therefore, signaling is effective.

Advantages of the present invention are not limited to those described above and other advantages will be clearly understood by those skilled in the art from the following description.

### [Description of Drawings]

The accompanying drawings, which are included to provide a further understanding of the invention, illustrate embodiments of the invention and together with the description serve to explain the principle of the invention.

In the drawings:
FIG. 1 illustrates a network structure of an Evolved Universal Mobile Telecommunication System (E-UMTS) according to the Related Art.
FIG. 2 illustrates a network structure of an Evolved Universal Terrestrial Radio Access Network (E-UTRAN) system according to the Related Art.

FIG. 3 illustrates the configurations of a control plane and a user plane of a radio interface protocol between the E-UTRAN and a User Equipment (UE) according to the Related Art.
FIG. 4 illustrates a Discontinuous Reception (DRX) cycle.
FIG. 5 is a flowchart illustrating a DRX operation according to an exemplary embodiment of the present invention.
FIG. 6 is a block diagram of a device for implementing DRX methods according to the exemplary embodiment of the present invention, which is applicable either to an eNB or a UE.

### [Best Mode]

Reference will now be made in detail to the preferred embodiments of the present invention with reference to the accompanying drawings. The detailed description, which will be given below with reference to the accompanying drawings, is intended to explain exemplary embodiments of the present invention, rather than to show the only embodiments that can be implemented according to the invention.

The following detailed description includes specific details in order to provide a thorough understanding of the present invention. However, it will be apparent to those skilled in the art that the present invention may be practiced without such specific details. For example, while the following description will be made centering on specific terms, these terms should not be construed as limiting the present invention. They may be replaced with other terms in the same meaning. Wherever possible, the same reference numbers will be used throughout the drawings to refer to the same or like parts.

The technologies, devices and system as described below are applicable to various radio access technologies, including Code Division Multiple Access (CDMA), Frequency Division Multiple Access (FDMA), Time Division Multiple Access (TDMA), Orthogonal Frequency Division Multiple Access (OFDMA), and Single Carrier-Frequency Division Multiple Access (SC-FDMA).

CDMA may be implemented in a radio technology such as Universal Terrestrial Radio Access (UTRA) or CDMA2. TDMA may be implemented in a radio technology such as Global System for Mobile communications (GSM), Global Packet Radio Service (GPRS), Enhanced Data Rate for GSM Evolution (EDGE), or the like. OFDMA may be implemented in a radio technology such as Institute of Electrical and Electronics Engineers (IEEE) 802.11 (Wireless Fidelity (Wi-Fi)), IEEE 802.16 (Worldwide interoperability for Microwave Access (WiMAX), IEEE 802.20, Evolved-UTRA (E-UTRA), or the like. UTRA is part of Universal Mobile Telecommunication System (UMTS), and 3^{rd} Generation Partnership Project (3GPP) Long Term Evolution (LTE) is part of E-UMTS using E-UTRA. 3GPP LTE applies OFDMA to the downlink and SC-FDMA to the uplink.

A Discontinuous Reception (DRX) setting method according to exemplary embodiments of the present invention will be described hereinafter. A DRX function that enables a User Equipment (UE) to receive a Physical Downlink Control Channel (PDCCH) discontinuously may be implemented by Radio Resource Control (RRC) signaling.

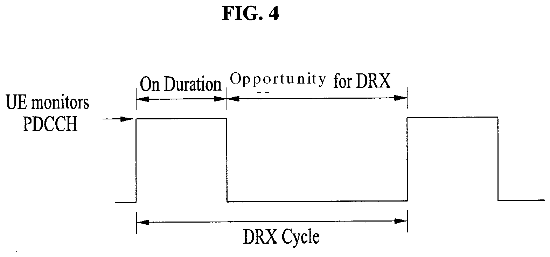

FIG. 4 illustrates a DRX cycle. As shown in FIG. 4, the UE monitors the PDCCH during the on duration period. The DRX cycle specifies the periodic repetition of the On Duration followed by a possible period of inactivity.

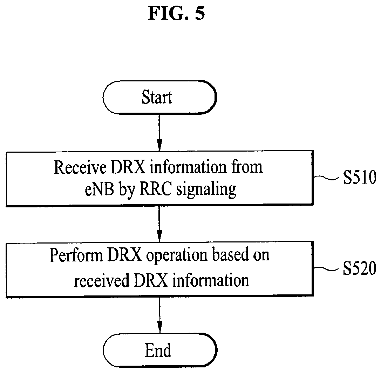

FIG. 5 is a flowchart illustrating a DRX operation according to an exemplary embodiment of the present invention. As shown in FIG. 5, the UE receives DRX information from an evolved Node B (eNB) by RRC signaling in step S510. In step S520, the UE performs a DRX operation based on the received DRX information. The DRX information is listed in Table 1 below.

**Table 1**

| DRX Configuration | Information provided by parameter |
|---|---|
| On Duration Timer | Timer value |
| DRX-Inactivity Timer | Timer value |
| DRX-Retransmission Timer | Timer value |
| LongDRX-CycleStartOffset | Offset for calculation of cycle start |
| ShortDRX-Cycle | Length of short cycle |
| DRXShortCycleTimer | Timer value |

The On Duration Timer is part of the DRX cycle. The On Duration Timer specifies the number of consecutive TTIs during which the UE monitors the PDCCH for possible allocations. The DRX-Inactivity Timer specifies the number of consecutive TTIs during which the UE monitors the PDCCH after successfully decoding a PDCCH indicating an initial user data transmission for the UE. The DRX-Retransmission Timer specifies the number of consecutive TTIs the UE monitors the PDCCH for as soon as the retransmission is expected by the UE. The DRXShortCycleTimer is a parameter specifying the number of consecutive TTIs the UE follows the Short DRX Cycle after the DRX-Inactivity Timer has expired.

The Short DRX Cycle helps the UE to save power in intermittent short non-data transmission periods during data transmission to the UE. The Long DRX Cycle helps the UE to save power during time periods in which no data is being transmitted or will be transmitted to the UE. For Internet browsing, as an example, a Short DRX Cycle can correspond to the period of time during which a web page is loaded, in which time period instantaneous power saving can be obtained. On the other hand, a Long DRX Cycle can correspond to the time period between a user's consecutive click, i.e., the time between a user's clicking of one page to his clicking to another page, in which time period power can be saved due to the absence of data. Therefore, the Short DRX Cycle is shorter than the Long DRX Cycle.

The eNB determines a UE to which it will transmit data in every TTI and notifies the UE of the presence of data directed thereto by a PDCCH. However, a plurality of UEs having the same DRX cycle waking in the same period is typically not desirable. When data is directed to all UEs in the same period, scheduling information may not be transmitted to all the UEs on the PDCCH.

For example, if there are ten UEs, i.e., UE1 to UE10, and the DRX cycle is 10 ms, the ten UEs each monitors the PDCCH every 10 ms to determine whether there are data directed to them. If the UEs start to perform DRX at time T = 0 ms, they will all wake up and attempt to receive the PDCCH at 0 ms, 10 ms, 20 ms, and so on. In this case, when the eNB receives data for all ten UEs during the time period between 11ms and 19ms, it may notify the UEs of the presence of data directed to them at time 20ms. However, since the PDCCH can carry a limited amount of scheduling information, the eNB may not be able to notify some of the UEs of the presence of their data. Accordingly, the eNB distributes the PDCCH monitoring periods of the UEs using offsets.

As an example, UE1 may be offset to be awake and attempt to receive the PDCCH at 1 ms, 11 ms, and 21 ms, and UE2 may be offset to be awake and attempt to receive the PDCCH at 2 ms, 12 ms, and 22 ms. These offsets are called DRX Start Offsets. The eNB notifies a given UE of a single value representing the DRX Start Offset of that UE. Hence, the UE determines when to start monitoring the PDCCH and how often to monitor the PDCCH based on the received single value representing the DRX Start Offset for that UE. For example, a Long DRX Cycle can be one of 10, 20, 32, 40, 64, 80, 128, 160, 256, 320, 512, 640, 1024, 1280, 2048, and 2560 (in units of ms), while a Short DRX Cycle can be one of 2, 5, 8, 16, 20, 32, 40, 64, 80, 128, 160, 256, 320, 512, and 640 (in units of ms).

However, if the eNB determines the DRX Start Offset based on a single DRX Cycle, e.g., a Long DRX Cycle, there can be problems. For example, assuming that the Long DRX Cycle is set to 2560 ms and the Short DRX Cycle is set to 512 ms, available DRX Start Offsets based on the Long DRX Cycle are 0 to 2559. If the eNB uses one of the values 0 to 511 as the DRX Start Offset, the operation described in Table 2 below, namely a running condition for an On Duration Timer, should have no problem.

**Table 2**

| DRX Operation |
|---|
| If the Short DRX Cycle is used and [(SFN x 10) + Subframe Number] modulo (Short DRX Cycle) = DRX Start Offset; or |
| If the Long DRX Cycle is used and [(SFN x 10) + Subframe Number] modulo (Long DRX Cycle) = DRX Start Offset: |
| Start the On Duration Timer. |

However, if the eNB uses one of the values 512 to 2559 as the DRX Start Offset, the remainder of dividing [(SFN x 10) + Subframe Number] by the Short DRX Cycle will always be smaller than 512. Therefore, there will be no subframe that satisfies the condition that the remainder of dividing [(SFN x 10) + Subframe Number] by the Short DRX Cycle is equal to the DRX Start Offset. As a result, even though the eNB sets a short DRX, the UE will not be able use the short DRX. Methods for solving the above problem will be described hereinafter.

### First Exemplary Embodiment

In accordance with a first exemplary embodiment of the present invention, the UE applies an operation modifying the DRX Start Offset received from the eNB when the Short DRX Cycle is used. This ensures that a subframe that satisfies the condition that the remainder of dividing [(SFN x 10) + Subframe Number] by the Short DRX Cycle is equal to the modified DRX Start Offset will always exist. An example of the operation modifying the DRX Start Offset can be a modulo operation. In particular, the modulo operation may be used to calculate the starting point of a Short DRX Cycle. Specifically, the UE performs a modulo operation with respect to the DRX Start Offset received from the eNB and uses the value after performing the modulo operation to determine the starting point of the On Duration Timer in the Short DRX Cycle. In this example, Table 2 is modified to Table 3 as shown below.

**Table 3**

| |
|---|
| DRX Operation |
| If the Short DRX Cycle is used and [(SFN x 10) + Subframe Number] modulo (Short DRX Cycle) = DRX Start Offset modulo (Short DRX Cycle); or |
| If the Long DRX Cycle is used and [(SFN x 10) + Subframe Number] modulo (Long DRX Cycle) = DRX Start Offset: |
| Start the On Duration Timer. |

The above-described method does not change the size of a message transmitted from the eNB to the UE, thereby saving radio resources. To be more specific, the eNB transmits a single value, i.e., single DRX Start Offset, to the UE. Therefore, signaling is effective.

For example, if the Long DRX Cycle is 2560 ms, the Short DRX Cycle is 512 ms, and the DRX Start Offset is 1000 ms, the modified DRX Offset value will become 488 ms, i.e., 1000 modulo 512, when the Short DRX Cycle is used. On the other hand, when the Long DRX Cycle is used, the DRX Start Offset will remain as 1000 ms. While a single DRX Start Offset is used in the first exemplary embodiment, a plurality of DRX Start Offsets can be used for respective DRX cycles, as described below in the second exemplary embodiment of the present invention.

### Second Exemplary Embodiment

In the second exemplary embodiment of the present invention, when the eNB sets a plurality of DRX cycles for the UE, it notifies the UE of DRX Start Offsets for the respective DRX cycles. Upon receipt of DRX configuration information from the eNB, especially when the DRX configuration information indicates a plurality of DRX cycles, the UE uses the DRX Start Offsets set for the respective DRX cycles in calculating the starts of the DRX cycles.

For example, when the eNB intends to set a Long DRX Cycle of 2560 ms and a Short DRX Cycle of 512 ms for the UE, it additionally notifies the UE of offset values for the two DRX cycles. For instance, the eNB can command the UE to use a DRX offset of 1000 for the Long DRX and a DRX offset of 488 for the Short DRX. Then the UE calculates DRX start time points using the DRX offsets received for the DRX levels, i.e., the Short and Long DRX Cycles.

According to the second embodiment, Table 2 is modified to Table 4. Although signaling transmitted from the eNB to the UE would increase, the above-described method eliminates the additional calculation operation performed in the first exemplary embodiment.

**Table 4**

| |
|---|
| DRX Operation |
| If the Short DRX Cycle is used and [(SFN x 10) + Subframe Number] modulo (Short DRX Cycle) = DRX Start Offset for the Short DRX Cycle); or |
| If the Long DRX Cycle is used and [(SFN x 10) + Subframe Number] modulo (Long DRX Cycle) = DRX Start Offset for the Long DRX Cycle: |
| Start the On Duration Timer. |

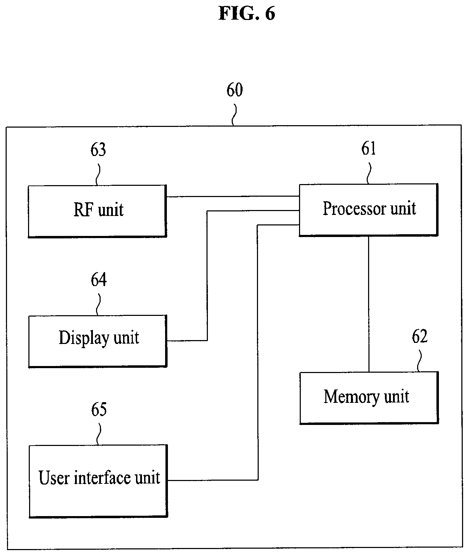

FIG. 6 is a block diagram of a device 60 for implementing the DRX methods according to the exemplary embodiments of the present invention, which is applicable to an eNB, a UE, or other devices in a wireless communication system. As shown in FIG. 6, a device 60 includes a processor unit 61, a memory unit 62, a Radio Frequency (RF) unit 63, a display unit 64, and a user interface unit 65. The processor unit 61 is responsible for a physical interface protocol layer. The processor unit 61 provides a control plane and a user plane. The processor unit 61 can also calculate a DRX offset based on whether a single DRX Start Offset is received from a base station to be used for both a Short DRX Cycle and a Long DRX Cycle, as in the first exemplary embodiment or multiple DRX Start Offsets are received, as in the second exemplary embodiment. The memory unit 62 is electrically connected to the processor unit 61 and stores an operating system, applications, and general files. If the device 60 is a UE, the display unit 64 may display a variety of pieces of information and may be configured with a Liquid Crystal Display (LCD), an Organic Light Emitting Diode (OLED), or the like. The user interface unit 65 may be configured in combination with a known user interface such as a keypad, a touch screen, or the like. The RF unit 63 is electrically connected to the processor unit 61 and transmits or receives a radio signal.

As is apparent from the above description, an eNB transmits a reduced amount of signaling information through an effective DRX setting in accordance with exemplary embodiments of the present invention. Therefore, the use efficiency of radio resources is increased.

Exemplary embodiments described above are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an exemplary embodiment of the present invention or included as a new claim by a subsequent amendment after the application is filed.

The term 'UE' may be replaced with the term 'Mobile Station (MS),' 'Subscriber Station (SS),' 'Mobile Subscriber Station (MSS),' 'mobile terminal,' or the like. The UE may be a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, or the like.

It will be apparent to those skilled in the art that various modifications and variations can be made in the method for monitoring downlink control channel in user equipments of the present invention without departing from the scope of the invention. Thus, it is intended that the present invention cover the modifications and variations of this invention provided they come within the scope of the appended claims and their equivalents.

### [Mode for Invention]

Various embodiments have been described in the best mode for carrying out the invention.

The above embodiments are provided by combining components and features of the present invention in specific forms. The components or features of the present invention should be considered optional unless explicitly stated otherwise. The components or features may be implemented without being combined with other components or features. The embodiments of the present invention may also be provided by combining some of the components and/or features. The order of the operations described above in the embodiments of the present invention may be changed. Some components or features of one embodiment may be included in another embodiment or may be replaced with corresponding components or features of another embodiment. It will be apparent that claims which are not explicitly dependent on each other can be combined to provide an embodiment or new claims can be added through amendment after this application is filed.

The embodiments of the present invention can be implemented by hardware, firmware, software, or any combination thereof. In the case where the present invention is implemented by hardware, an embodiment of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

In the case where the present invention is implemented by firmware or software, the embodiments of the present invention may be implemented in the form of modules, processes, functions, or the like which perform the features or operations described above. Software code can be stored in a memory unit so as to be executed by a processor. The memory unit may be located inside or outside the processor and can communicate data with the processor through a variety of known means.

Those skilled in the art will appreciate that the present invention may be embodied in other specific forms than those set forth herein without departing from the spirit and essential characteristics of the present invention. The above description is therefore to be construed in all aspects as illustrative and not restrictive. The scope of the invention should be determined by reasonable interpretation of the appended claims and all changes coming within the equivalency range of the invention are intended to be embraced in the scope of the invention.

### [Industrial Applicability]

The present invention can be used for a user equipment, a base station, or other devices in a wireless mobile communication system.

## Claims

1. A method for discontinuously monitoring downlink control channel in a user equipment in a wireless communication system, the method comprising:
receiving a discontinuous reception, DRX, Start Offset from a base station to be used for both a first DRX Cycle and a second DRX Cycle; and
starting an On Duration Timer at a subframe that satisfies either a first condition for the first DRX Cycle or a second condition for the second DRX Cycle,
wherein a first DRX offset used in the first condition is based upon the DRX Start Offset received from the base station, and
wherein a second DRX offset used in the second condition is a calculation result of {DRX Start Offset} MOD {second DRX Cycle}, where the {DRX Start Offset} denotes a value of the DRX Start Offset received from the base station, the {second DRX Cycle} denotes a value of the second DRX cycle, and MOD denotes a modulo operation

2. The method of claim 1, wherein the first DRX Cycle is longer than the second DRX Cycle.

3. The method of claim 1, wherein the first and second DRX offsets determine start positions of active periods in monitoring the downlink control channel when the first and second DRX Cycles are used, respectively.

4. The method of claim 1, wherein the discontinuous channel monitoring is performed using one of Code Division Multiple Access, Frequency Division Multiple Access, Time Division Multiple Access, Orthogonal Frequency Division Multiple Access, and Single Carrier-Frequency Division Multiple Access.

5. An apparatus for discontinuously monitoring downlink control channel in a user equipment in a wireless communication system, the apparatus comprising:
a radio frequency receiver to receive a discontinuous reception, DRX, Start Offset from a base station to be used for both a first DRX Cycle and a second DRX Cycle;
a processor to start an On Duration Timer at a subframe that satisfies either a first condition for the first DRX Cycle or a second condition for the second DRX Cycle,
wherein a first DRX offset used in the first condition is based upon the DRX Start Offset received from the base station, and
wherein the second DRX offset used in the second condition is a calculation result of {DRX Start Offset} MOD {second DRX Cycle}, where the {DRX Start Offset} denotes a value of the DRX Start Offset received from the base station, the {second DRX Cycle} denotes a value of the second DRX cycle, and MOD denotes a modulo operation; and
a memory to store the first DRX offset and the second DRX offset.

6. The apparatus of claim 5, wherein the first DRX Cycle is longer than the second DRX Cycle.

7. The apparatus of claim 5, wherein the first and second DRX offsets determine start positions of active periods in monitoring the downlink control channel when the first and second DRX Cycles are used, respectively.

8. The apparatus of claim 5, the discontinuous channel monitoring is performed using one of Code Division Multiple Access, Frequency Division Multiple Access, Time Division Multiple Access, Orthogonal Frequency Division Multiple Access, and Single Carrier-Frequency Division Multiple Access.

## Patentansprüche

1. Verfahren zur diskontinuierlichen Überwachung eines Downlink-Steuerkanals in einem Benutzergerät in einem drahtlosen Kommunikationssystem, wobei das Verfahren umfasst:
Empfangen eines DRX-Start-Offsets (DRX = discontinuous reception (diskontinuierlicher Empfang)) aus einer Basisstation, zu verwenden für sowohl einen ersten DRX-Zyklus als auch einen zweiten DRX-Zyklus; und
Starten eines On-Duration-Timers an einem Subframe, der entweder eine erste Bedingung für den ersten DRX-Zyklus oder eine zweite Bedingung für den zweiten DRX-Zyklus erfüllt,
wobei ein in der ersten Bedingung verwendeter erster DRX-Offset auf dem aus der Basisstation empfangenen DRX-Start-Offset basiert und
wobei ein in der zweiten Bedingung verwendeter zweiter DRX-Offset ein Berechnungsergebnis von {DRX-Start-Offset} MOD {zweiter DRX-Zyklus} ist, wo der {DRX-Start-Offset} einen Wert des aus der Basisstation empfangenen DRX-Start-Offsets bezeichnet, der {zweite DRX-Zyklus} einen Wert des zweiten DRX-Zyklus bezeichnet und MOD eine Modulo-Operation bezeichnet.

2. Verfahren nach Anspruch 1, wobei der erste DRX-Zyklus länger als der zweite DRX-Zyklus ist.

3. Verfahren nach Anspruch 1, wobei der erste und der zweite DRX-Offset Startpositionen von aktiven Perioden bei der Überwachung des Downlink-Steuerkanals, wenn der erste bzw. der zweite DRX-Zyklus verwendet wird, bestimmen.

4. Verfahren nach Anspruch 1, wobei die diskontinuierliche Kanalüberwachung unter Verwendung von Code Division Multiple Access oder Frequency Division Multiple Access oder Time Division Multiple Access oder Orthogonal Frequency Division Multiple Access oder Single Carrier-Frequency Division Multiple Access durchgeführt wird.

5. Vorrichtung zur diskontinuierlichen Überwachung eines Downlink-Steuerkanals in einem Benutzergerät in einem drahtlosen Kommunikationssystem, wobei die Vorrichtung umfasst:
einen Hochfrequenzempfänger zum Empfangen eines DRX-Start-Offsets (DRX = discontinuous reception (diskontinuierlicher Empfang)) aus einer Basisstation, zu verwenden für sowohl einen ersten DRX-Zyklus als auch einen zweiten DRX-Zyklus;
einen Prozessor zum Starten eines On-Duration-Timers an einem Subframe, der entweder eine erste Bedingung für den ersten DRX-Zyklus oder eine zweite Bedingung für den zweiten DRX-Zyklus erfüllt,
wobei ein in der ersten Bedingung verwendeter erster DRX-Offset auf dem aus der Basisstation empfangenen DRX-Start-Offset basiert und
wobei der in der zweiten Bedingung verwendete zweite DRX-Offset ein Berechnungsergebnis von {DRX-Start-Offset} MOD {zweiter DRX-Zyklus} ist, wo der {DRX-Start-Offset} einen Wert des aus der Basisstation empfangenen DRX Start-Offsets bezeichnet, der {zweite DRX-Zyklus} einen Wert des zweiten DRX-Zyklus bezeichnet und MOD eine Modulo-Operation bezeichnet; und
einen Speicher zum Speichern des ersten DRX-Offsets und des zweiten DRX-Offsets.

6. Vorrichtung nach Anspruch 5, wobei der erste DRX-Zyklus länger als der zweite DRX-Zyklus ist.

7. Vorrichtung nach Anspruch 5, wobei der erste und der zweite DRX-Offset Startpositionen von aktiven Perioden bei der Überwachung des Downlink-Steuerkanals, wenn der erste bzw. der zweite DRX-Zyklus verwendet wird, bestimmen.

8. Vorrichtung nach Anspruch 5, wobei die diskontinuierliche Kanalüberwachung unter Verwendung von Code Division Multiple Access oder Frequency Division Multiple Access oder Time Division Multiple Access oder Orthogonal Frequency Division Multiple Access oder Single Carrier-Frequency Division Multiple Access durchgeführt wird.

## Revendications

1. Procédé de surveillance discontinue d'un canal de commande de liaison descendante dans un équipement utilisateur dans un système de communication sans fil, le procédé comprenant :
la réception d'un décalage initial de réception discontinue, DRX, à partir d'une station de base, à utiliser à la fois pour un premier cycle DRX et un deuxième cycle DRX ; et
le démarrage d'un compteur de temps de durée d'activation au niveau d'une sous-trame qui satisfait soit une première condition pour le premier cycle DRX soit une deuxième condition pour le deuxième cycle DRX,
dans lequel un premier décalage DRX utilisé dans la première condition est basé sur le décalage initial DRX reçu à partir de la station de base, et
dans lequel un deuxième décalage DRX utilisé dans la deuxième condition est un résultat de calcul de {décalage initial DRX} MOD {deuxième cycle DRX}, où le {décalage initial DRX} désigne une valeur du décalage initial DRX reçu à partir de la station de base, le {deuxième cycle DRX} désigne une valeur du deuxième cycle DRX et MOD désigne une opération modulo.

2. Procédé selon la revendication 1, dans lequel le premier cycle DRX est plus long que le deuxième cycle DRX.

3. Procédé selon la revendication 1, dans lequel les premier et deuxième décalages DRX déterminent des positions de départ de périodes actives dans la surveillance du canal de commande de liaison descendante quand les premier et deuxième cycles DRX sont respectivement utilisés.

4. Procédé selon la revendication 1, dans lequel la surveillance discontinue de canal est effectuée en utilisant un parmi un accès multiple par répartition en code, un accès multiple par répartition en fréquence, un accès multiple par répartition dans le temps, un accès multiple par répartition en fréquence orthogonale et un accès multiple par répartition en fréquence à porteuse unique.

5. Appareil de surveillance discontinue d'un canal de commande de liaison descendante dans un équipement utilisateur dans un système de communication sans fil, l'appareil comprenant :
un récepteur de fréquence radio pour recevoir un décalage initial de réception discontinue, DRX, à partir d'une station de base, à utiliser à la fois pour un premier cycle DRX et un deuxième cycle DRX ;
un processeur pour démarrer un compteur de temps de durée d'activation au niveau d'une sous-trame qui satisfait soit une première condition pour le premier cycle DRX soit une deuxième condition pour le deuxième cycle DRX,
dans lequel un premier décalage DRX utilisé dans la première condition est basé sur le décalage initial DRX reçu à partir de la station de base, et
dans lequel le deuxième décalage DRX utilisé dans la deuxième condition est un résultat de calcul de {décalage initial DRX} MOD {deuxième cycle DRX}, où le {décalage initial DRX} désigne une valeur du décalage initial DRX reçu à partir de la station de base, le {deuxième cycle DRX} désigne une valeur du deuxième cycle DRX et MOD désigne une opération modulo ; et
une mémoire pour stocker le premier décalage DRX et le deuxième décalage DRX.

6. Appareil selon la revendication 5, dans lequel le premier cycle DRX est plus long que le deuxième cycle DRX.

7. Appareil selon la revendication 5, dans lequel les premier et deuxième décalages DRX déterminent des positions de départ de périodes actives dans la surveillance du canal de commande de liaison descendante quand les premier et deuxième cycles DRX sont respectivement utilisés.

8. Appareil selon la revendication 5, dans lequel la surveillance discontinue de canal est effectuée en utilisant un parmi un accès multiple par répartition en code, un accès multiple par répartition en fréquence, un accès multiple par répartition dans le temps, un accès multiple par répartition en fréquence orthogonale et un accès multiple par répartition en fréquence à porteuse unique.
